# EUROPÄISCHE PATENTSCHRIFT

(11) **EP 0 509 125 B1**
(45) Veröffentlichungstag und Bekanntmachung des Hinweises auf die Patenterteilung: **25.01.1995**
(21) Anmeldenummer: 91106337.8
(22) Anmeldetag: 19.04.1991
(51) Int. Cl.: H02J 5/00, H04B 5/00, G06K 7/08

(54) **Einrichtung zur berührungslosen Daten- und Energieübertragung sowie Verfahren zum Betrieb einer solchen**
Device for contactless data and energy transmission and operating method
Dispositif pour la transmission sans contact de données et d'énergie et procédé de mise en oeuvre

(43) Veröffentlichungstag der Anmeldung: 21.10.1992
(73) Patentinhaber: SIEMENS AKTIENGESELLSCHAFT, 80333 München (DE)
(72) Erfinder: Donig, Günter, W-8012 Ottobrunn (DE); Scheckel, Bruno, W-8017 Ebersberg (DE); Schön, Karl-Reinhard, W-8000 München 2 (DE); Reiner, Robert, W-8025 Unterhaching (DE)

(56) Entgegenhaltungen:
- EP-A- 0 185 610
- EP-A- 0 309 201
- EP-A- 0 334 804
- PATENT ABSTRACTS OF JAPAN vol. 12, no. 192 (P-712)4. Juni 1988 & JP-A-62 297 988 ( OKI ELECTRIC IND CO LTD ) 25. Dezember 1987

## Beschreibung

Die Erfindung betrifft eine Einrichtung zur berührungslosen Daten- und Energieübertragung nach dem Oberbegriff des Patentanspruchs 1 sowie ein Verfahren zum Betrieb einer solchen.

Eine solche Einrichtung ist in der europ. Patentanmeldung 90 113 587.1, EP-A-0 466 949 (Stand der Technik nach Artikel 54(3) EPÜ), insbesondere FIG 1 und FIG 2 und der dazugehörigen Beschreibung beschrieben.

Sie zeigt eine Einrichtung zur berührungslosen Daten- und Energieübertragung, bestehend aus einem stationären Teil (ST) mit einem Oszillator (OSC) zur kontaktlosen Leistungsübertragung mit Hilfe von einem Spulenpaar (L1A, L2A; L1B, L2B) an einen beweglichen Teil (BT), wobei die Schwingung des Oszillators (OSC) in eine Bezugsschwingung und eine Informationsschwingung aufgespalten ist und der Informationsschwingung in Abhängigkeit von den zu übertragenden Daten (DT1) eine Phasenverschiebung gegenüber der Bezugsschwingung aufgezwungen wird, wobei diese phasenverschobene Schwingung über ein erstes Spulenpaar (L1B, L2B, bzw. L1A, L2A) und die Bezugsschwingung über ein zweites Spulenpaar (L1A, L2A bzw. L1B, L2B) den beweglichen Teil (BT) zugeführt wird, wobei im beweglichen Teil (BT) die übertragenen Schwingungen einer Demodulatorschaltung (DEMOD) zugeführt werden, die aus der Phasenverschiebung die Daten wiedergewinnt und wobei eine Datenübertragung vom beweglichen Teil (BT) zum stationären Teil (ST) durch Belastungsänderung erfolgt. Die Leistungsübertragung wird nur mit Hilfe eines Spulenpaars bewerkstelligt und die Datenübertragung vom beweglichen Teil zum stationären Teil nur durch Belastungsänderung an der Spule des beweglichen Teils, die nicht der Leistungsübertragung dient.

Um sicherzustellen, daß die Spulen des stationären Teils de Spulen des beweglichen Teils zur Bildung von Spulenpaaren beliebig zuordenbar sind und somit, wenn auch nicht gleichzeitig, über jede der beiden Spulen Energie oder Daten übertragen werden können, ist jeder der beiden Spulen des beweglichen Teils außer einer Gleichrichterschaltung zumindest jeweils das Stellglied eines Spannungsreglers zugeordnet und außerdem zumindest jeweils ein Schalter zugeordnet, der in Abhängigkeit von seiner Ansteuerung und der dadurch bewirkten Schalterstellung die Belastung des ihm zugeordneten Spulenpaars verändern kann. Es kann auch jeder der Spulen ein Spannungsregler und eine veränderbare Last zugeordnet sein. In allen dieser Fälle muß durch eine logische Verknüpfung sichergestellt sein, daß der für die Datenübertragung vom beweglichen Teil zum stationären Teil benötigte Amplitudenmodulator immer die Belastung des Spulenpaars verändert, das keinen Anteil an der Energieübertragung hat, dessen Spannungsregler bzw. Spannungsreglerstellglied folglich nicht aktiviert ist, bzw. dem der Spannungsregler nicht nachgeschaltet ist.

Wenn die Spulen des beweglichen Teils und die Spulen des stationären Teils beliebig koppelbar sein sollen und deshalb eine Demodulatorschaltung mit einer Schaltungseinheit zum Festlegen des Logikpegels des Signales vorgesehen ist, so kann diese Schaltungseinheit in der gleichen Weise, in der sie den Logikpegel festlegt, auch erkennen, an welcher der Spulen des beweglichen Teils die Bezugsschwingung und an welcher der Spulen des beweglichen Teils die in ihrer Phasenlage zur Bezugsschwingung veränderliche Informationsschwingung übertragen werden. Es wird bei einer solchen Einrichtung zur berührungslosen Daten- und Energieübertragung in Abhängigkeit von einem diese Information enthaltenden Signal der Demodulatorschaltung durch eine logische Verknüpfung festgelegt, welche Spule des beweglichen Teils für die Datenübertragung vom beweglichen Teil zum stationären Teil eingesetzt wird und welche Spule für die Energieübertragung vorgesehen ist, wobei sichergestellt ist, daß die Datenübertragung vom beweglichen Teil zum stationären Teil mit Hilfe der Spule des beweglichen Teils erfolgt, die momentan nicht zur Energieübertragung eingesetzt ist. Um eine kontinuierliche Energieversorgung des beweglichen Teils sicherzustellen, wird hierbei der die Bezugsschwingung übertragenden Spule ein Spannungsregler nachgeschaltet bzw. ein dieser Spule nachgeschalteter Spannungsregler aktiviert und an der die Informationsschwingung übertragenden Spule des beweglichen Teils wird für die Datenübertragung vom beweglichen Teil zum stationären Teil die Belastung in Abhängigkeit der zu übertragenden Daten variiert.

Ein Nachteil der obenbeschriebenen Anordnung besteht darin, daß für jede Spule und nachgeschalteten Gleichrichter jeweils ein Ladekondensator notwendig ist, welcher bei Integration einen erheblichen Platzbedarf beansprucht. Ein weiterer Nachteil sind Amplitudenmodulationsrückwirkungen auf den Versorgungszweig durch den jeweils im Betrieb befindlichen Modulator.

Aufgabe der Erfindung ist es daher, eine Einrichtung zur berührungslosen Daten- und Energieübertragung anzugeben, welche bei Integration eine möglichst geringe Fläche für den Ladekondensator aufweist und die Amplidutenmodulationrückwirkungen vermeidet.

Diese Aufgabe wird durch die kennzeichnenden Merkmale des Anspruchs 1 bzw. 6 gelöst. Weiterbildungen sind Kennzeichen der abhängigen Ansprüche.

Vorteil der Erfindung ist, daß im Schaltungsaufwand verhältnismäßig geringe Mittel vorgesehen sind, welche es ermöglichen, daß die jeweils im Betrieb befindliche Modulationsbrücke von dem Versorgungszweig abgeklemmt wird.

Die Erfindung wird anhand von drei Figuren näher erläutert.
- FIG 1: zeigt eine prinzipielle Anordnung einer erfindungsgemäßen Einrichtung zur berührungslosen Daten- und Energieübertragung,
- FIG 2: zeigt eine erfindungsgemäße Modulatorschaltung gemäß FIG 1, und
- FIG 3: zeigt eine Erweiterung der in FIG 2 gezeigten Modulatorschaltung

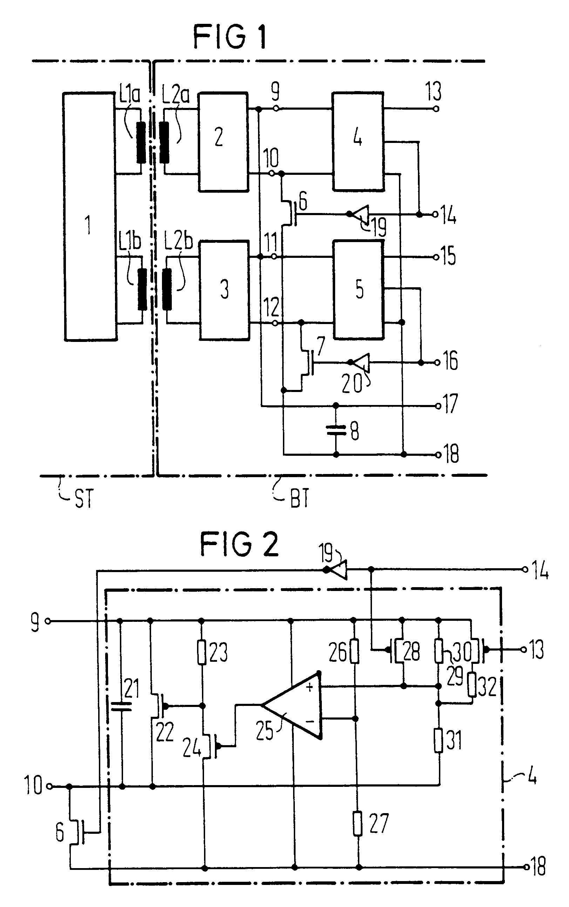

FIG 1 zeigt ausschnittsweise ein stationäres Teil ST welches zwei Übertragungsspulen L1a, L1b sowie eine Funktionseinheit 1 aufweist. Die Funktionseinheit 1 enthält alle wesentlichen Einrichtungen zum Übertragen von Energie und zum Senden und Empfangen von Daten. Desweiteren ist ausschnittsweise der bewegliche Teil BT mit seinen beiden Spulen L2a, L2b dargestellt. Die erste Spule L2a ist mit einer ersten Gleichrichtereinheit 2 verschaltet. Die Gleichrichtereinheit 2 weist zwei Ausgänge 9, 10 auf, die wiederum mit einer Modulatoreinheit 4 verbunden sind. Die Modulatoreinheit 4 hat die Steuereingänge 13 und 14. Ebenso ist die zweite Spule L2b mit einer zweiten Gleichrichtereinheit 3 verschaltet, die wiederum zwei Ausgänge 11, 12 aufweist, welche ihrerseits mit einer zweiten Modulatoreinheit 5 verbunden sind. Auch die zweite Modulatoreinheit 5 hat zwei Steuereingänge 15 und 16. Jeweils der erste Ausgang 9, 11 der beiden Gleichrichtereinheiten 2, 3 sind miteinander verschaltet und führen zu einem ersten Anschluß 17. Die jeweils zweiten Anschlüsse 10, 12 der beiden Gleichrichtereinheiten sind jeweils über die Laststrecke eines ersten und zweiten Schalttransistors 6, 7 mit einem zweiten Anschluß 18 verbunden. Zwischen den Anschlüssen 17 und 18 ist ein Ladekondensator 8 geschaltet. An den Anschlüssen 17 und 18 kann nun die ungeregelte Betriebsspannung abgegriffen werden. Das Bezugspotential, das am Anschluß 18 anliegt ist außerdem mit den beiden Modulatoreinheiten 4, 5 verschaltet. Ein erster und zweiter Steueranschluß 14, 16 sind vorgesehen, die über jeweils einen Inverter 19, 20 mit den Steuereingängen der beiden Schalttransistoren 6, 7 verbunden sind.

Wie in FIG 1 zu sehen ist, sind beide Gleichrichter/Modulatorzweige 2, 4 und 3, 5 der zugehörigen Spulen L2a, L2b völlig gleich aufgebaut. Beim Einschalten des Systems liegen an den Steuereingängen 14 und 16 immer logisch "0"-Signale an, so daß beide Brücken als Versorgungsbrücken geschaltet sind, da die jeweiligen Transistoren jeweils eingeschaltet sind und somit die über eine der beiden Spulen L2a, L2b übertragene Energie den Kondensator 8 auflädt. Nach Ablauf bzw. während der Initialisierungszeit erkennt eine nachgeschaltete Einheit die in FIG 1 nicht dargestellt ist, diejenige Spule L2a; L2b, die zur Datenübertragung dient und schaltet sie über das entsprechende Steuersignal, welches sie den Steuereingängen 14, 16 zuführt, von der Versorgungsspannung ab.

Beispielsweise sei angenommen, daß die Spulen L1b und L2b zur Energieübertragung dienen und die Spulen L1a, L2a zur Datenübertragung dienen. Die nicht dargestellte Einheit erkennt dies innerhalb der Initialisierungszeit und legt am Steueranschluß 14 ein logisches "1"-Signal, sowie am Steueranschluß 16 ein logisches "0"-Signal an. Dadurch wird der Transistor 6 gesperrt und somit die Modulatoreinheit 4 und die Gleichrichtereinheit 2 von dem Ladekondensator 8 abgekoppelt. Liegt nun am Anschluß 13 des Modulators ein Datensignal an, so kann dieses ohne Beeinflussung der Betriebsspannung, welche an den Anschlüssen 17, 18 abgegriffen werden kann, des beweglichen Teils an den stationären Teil übertragen werden.

Die zur Übertragung notwendige Modulatoreinheit 4 ist detailliert in FIG 2 dargestellt. Zwischen den Anschlüssen 9 und 10 ist zum einen ein Kondensator 21 sowie die Laststrecke eines dritten Transistors 22 geschaltet. Zwischen dem Anschluß 9 und dem Bezugspotential 18 liegt die Reihenschaltung eines Widerstands 23 und der Laststrecke eines vierten Transistors 24. Der Knotenpunkt der Reihenschaltung ist mit dem Steuereingang des dritten Transistors 22 verbunden. Weiterhin ist der Steuereingang des vierten Transistors 24 mit dem Ausgang eines Operationsverstärkers 25 verbunden, dessen Betriebsspannungsanschlüsse zum einen mit dem Anschluß 9 und zum anderen mit dem Bezugspotential 18 verschaltet sind. Eine weitere Reihenschaltung aus zweitem und drittem Widerstand 29, 31 ist zwischen die Anschlußklemmen 9 und 10 geschaltet. Der Mittelabgriff der Reihenschaltung ist mit dem positiven Eingang des Operationsverstärkers 25 verbunden. Parallel zum zweiten Widerstand 29 ist die Laststrecke eines weiteren fünften Transistoren 28, geschaltet. Weiterhin ist die Reihenschaltung der Laststrecke eines sechsten Transistors 30 und eines vierten Widerstands 32 parallel zum zweiten Widerstand 29 geschaltet. Der Steuereingang des fünften Transistors 28 ist mit der Anschlußklemme 14 verbunden und der Steuereingang des sechsten Transistors 30 mit der Anschlußklemme 13. Zwischen der Anschlußklemme 9 und dem Bezugspotential 18 befindet sich eine Reihenschaltung aus einem fünften und sechsten Widerstand 26, 27. Deren Knotenpunkt ist mit dem negativen Eingang des Operationsverstärkers 25 verschaltet. Zusätzlich ist in FIG 2 noch der erste Transistor 6 sowie der Inverter 19 gemäß FIG 1 dargestellt.

Liegt am Anschluß 13 ein logisches "1"-Signal an, so wird das Potential am Anschluß 10 auf das durch die Spannungsteiler 26, 27 sowie 29, 31 definierte Potential begrenzt, da der sechste Transistor 30 sperrt. Dieses Potential bzw. die Spannung zwischen den Anschlüssen 9, 10 stellt den digitalen Wert "1" dar. Liegt an der Anschlußklemme 13 ein logisches "0"-Signal an, so wird dem Spannungsteiler 29, 31 ein zusätzlicher Widerstand 32 parallel geschaltet und es stellt sich an dem Anschluß 10 ein Potential ein, welches den digitalen Wert "0" definiert. Über die Potentialdifferenz am Anschluß 10 für die verschiedenen digitalen Zustände wird die Belastungsmodulation realisiert, die primärseitig im stationären Teil detektiert wird. Die Blockkapazität 21 dient dazu, die pulsierende Gleichspannung an den Anschlüssen 9, 10 der abgeschalteten Brücke soweit zu glätten, daß der parasitäre Substrattransistor des ersten Transistors 6 nicht betrieben wird.

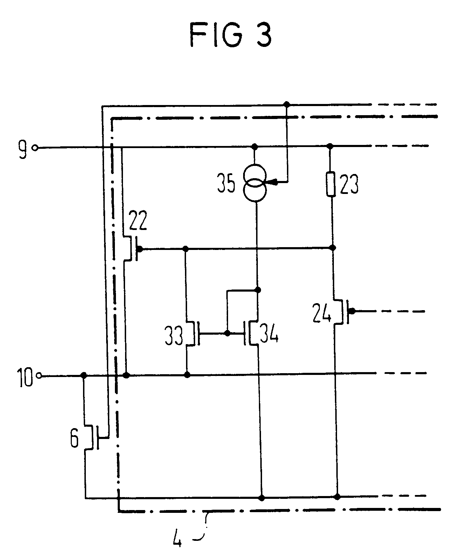

Eine weitere Ausführungsform eines Modulators ist in FIG 3 gezeigt. FIG 3 zeigt dabei nur den gegenüber FIG 2 erweiterten Bereich der Schaltungsanordnung. So ist wiederum außerhalb des Modulators 4 der erste Transistor 6 dargestellt. Innerhalb des Modulators 4 sind der dritte Transistor 22, der erste Widerstand 23 und der vierte Transistor 24 gemäß FIG 2 dargestellt. Neu ist der Stromspiegel bestehend aus der steuerbaren Stromquelle 35 und dem siebten und achten Transistor 33, 34. Die steuerbare Stromquelle 35 ist zwischen dem Anschluß 9 und dem Bezugspotential 18 geschaltet. In Serie zur steuerbaren Stromquelle 35 ist die Laststrecke des achten Transistors 34 geschaltet. Die Laststrecke des siebten Transistors 33 ist zwischen dem Steueranschluß des dritten Transistors 22 und dem Anschluß 10 geschaltet. Die Steuereingänge des siebten und achten Transistors 33, 34 sind miteinander sowie mit dem Knotenpunkt der Reihenschaltung aus steuerbarer Stromquelle 35 und Laststrecke des achten Transistors 34 verbunden. Die übrigen Bauelemente entsprechen denen in FIG 2 dargestellten. Lediglich die Kapazität 21 kann hier vorteilhafterweise entfallen.

Die Stromspiegelschaltung 33, 34, 35 stellt eine sogenannte Klemmschaltung dar, die es vermeidet, daß das Potential am Anschluß 10 bei der vom Bezugspotential abgeschalteten Brücke 2 unter eine vorgegebene Referenz sinkt. Die Kapazität 21 kann durch diese Schaltung entfallen. Mit Abschalten der Brücke über das am Anschluß 14 anliegende Signal wird eine Stromquelle 35 aktiviert, die über die Übersetzung durch die Transistoren 33, 34 den dritten Transistor 22 einschaltet, wenn das Potential am Anschluß 10 unter die vorgegebene Referenz sinkt. Da am Steuereingang des schon vorhandenen dritten Transistors 22 geschaltet wird, ist die benötigte Chipfläche gegenüber einer notwendigen Blockkapazität 21 sehr viel kleiner.

Für den Modulator 5 aus FIG 1 gelten die gleichen Ausführungsformen wie für den Modulator 4. Aus Übersichtlichkeitsgründen wurde immer nur der Modulator 4 näher beschrieben.

Einrichtungen zur berührungslosen Daten- bzw. Energieübertragung sind in diesem Zusammenhang Systeme, bei denen sowohl an den stationären Teil ST als auch an den beweglichen Teil BT der Einrichtung zur berührungslosen Daten- und Energieübertragung ein Datenträger angeschlossen ist und mindestens an den stationären Teil ST eine Datenverarbeitungseinheit angeschlossen ist.

Der bewegliche Teil BT kann in Form eines Schlüssels ausgeführt sein. In Zugangssystemen ist dann der stationäre Teil in Form eines Schlosses ausgeführt. In Datenaustauschsystemen ist der stationäre Teil in Form eines Lese- und Schreibgerätes eventuell gekoppelt an eine Datenverarbeitungseinheit ausgeführt.

Soll der Schlüssel als reiner Datenträger benutzt werden, so ist z. B. der stationäre Teil ein Schreib-Lesegerät, welches nur zum Datenaustausch benutzt wird. In der Automobilbranche würde der Schlüssel dann z. B. individuelle Kraftfahrzeugdaten speichern.

Der bewegliche Teil einer erfindungsgemäßen Anordnung zur berührungslosen Daten- und Energieübertragung kann außerdem in Form einer Chipkarte ausgebildet sein. In diesem Fall ist der stationäre Teil Teil eines Lesegerätes bzw. eines Schreib- und Lesegerätes.

## Patentansprüche

1. Einrichtung zur berührungslosen Daten- und Energieübertragung, bestehend aus einem stationären Teil (ST) mit Mitteln (1) zum Senden und Empfangen von Daten, welche mit Hilfe je eines ersten Spulenpaares (L1a, L2a, bzw. L1b, L2b) an ein bewegliches Teil (BT) übertragen werden und mit Mitteln (1) zum Erzeugen von Energie, die über ein zweites Spulenpaar (L1b, L2b, bzw. L1a, L2a) an das bewegliche Teil übertragen wird, wobei die Spulen des stationären Teils (ST) zu den Spulen des beweglichen Teils (BT) beliebig zuzuordnen sind, und die Datenübertragung vom beweglichen Teil (BT) zum stationären Teil (ST) durch Belastungsänderung an derjenigen Spule des beweglichen Teils erfolgt, die nicht zur Energieübertragung dient, wobei den Spulen (L2a, L2b) des beweglichen Teils (BT) jeweils Gleichrichtermittel (2, 3) nachgeschaltet sind, den Gleichrichtermitteln (2, 3) jeweils ein Modulator (4, 5) nachgeschaltet ist und den Modulatoren (4, 5) eine Verarbeitungseinheit nachgeschaltet ist, **dadurch gekennzeichnet,** daß jeweils ein Ausgang (10, 12; 9, 11) eines Gleichrichtermittels (2, 3) über die Laststrecke jeweils eines von der Verabeitungseinheit steuerbaren Halbleiterelementes (6, 7) mit einem Ladekondensator, an welchem die ungeregelte Betriebsspannung abgreifbar ist, (8) verbunden ist, wobei die steuerbaren Halbleiterelemente (6, 7) von der Verarbeitungseinheit derart angesteuert werden, daß während einer Initialisierungszeit beide Halbleiterelemente (6, 7) leitend geschaltet sind und nach der Initialisierungszeit nur das Halbleiterelement (6 bzw. 7) leitend geschaltet ist, welches mit einem der Ausgänge des Gleichrichtermittels (2 bzw. 3) verbunden ist, über welches Energie übertragen wird.

2. Einrichtung zur berührungslosen Daten- und Energieübertragung nach Anspruch 1,
**gekennzeichnet** durch
einen Modulator (4, 5) mit:
- einem ersten Transistor (22), über dessen Laststrecke die beiden Ausgänge (9, 10; 11, 12) der Gleichrichtermittel miteinander verbunden sind,
- einer Reihenschaltung aus einem Widerstand (23) und der Laststrecke eines zweiten Transistors (24) die zwischen dem Betriebsspannungsanschlüssen (9, 18; 11, 18) geschaltet ist und deren Knotenpunkt mit dem Steueranschluß des ersten Transistors (22) verbunden ist,
- einem Operationsverstärker (25), dessen Ausgang mit dem Steuereingang des zweiten Transistors (24) verbunden ist und dessen negativem Eingang eine Referenzspannung zugeführt wird und dessen positiver Eingang zum einen über einen Anschluß einer Laststrecke eines dritten Transistors (28, 30) und zum anderen über eine Reihenschaltung aus der Laststrecke eines vierten Transistors und eines zweiten Widerstands mit dem ersten Eingang (9; 11) verbunden ist,
- mit einer Reihenschaltung aus einem dritten und vierten Widerstand (29, 31), die zwischen die beiden Eingänge (9, 10; 11, 12) geschaltet sind und deren Knotenpunkt mit dem positiven Eingang des Operationsverstärkers verschaltet ist,
- einem ersten Steuereingang (13, 15) der mit dem Steueranschluß des vierten Transistors (30) verbunden ist und dem das Datensignal zugeführt wird,
- einem zweiten Steuereingang (14; 16) dem das Signal zum Trennen des Modulators und Gleichrichters von dem Ladekondensator (8) und der mit dem Steuereingang des dritten Transistors (28) verbunden ist.

3. Einrichtung zur berührungslosen Daten- und Energieübertragung nach Anspruch 2,
**dadurch gekennzeichnet,**
daß zwischen den beiden Ausgängen (9, 10; 11, 12) der Gleichrichtermittel eine Kapazität (21) angeschlossen ist.

4. Einrichtung zur berührungslosen Daten- und Energieübertragung nach Anspruch 2,
**dadurch gekennzeichnet,** daß
- eine steuerbare Stromquelle (35) zwischen die Betriebsspannungsanschlüsse (9, 18; 11, 18) geschaltet ist,
- ein Stromspiegel (33, 34) vorgesehen ist, der eingangsseitig seriell zur steuerbaren Stromquelle (35) liegt und ausgangsseitig zwischen dem Steuereingang des ersten Transistors (22) und dem zweiten Eingang (10; 12) des Modulators (4; 5) geschaltet ist.

5. Einrichtung zur berührungslosen Daten- und Energieübertragung nach einem der vorherigen Ansprüche, dadurch **gekennzeichnet,** daß der bewegliche Teil (BT) in Form einer Scheckkarte oder eines Chipschlüssels ausgeführt ist.

6. Verfahren zum Betrieb einer Einrichtung zur berührungslosen Daten- und Energieübertragung nach einem der Ansprüche 1 bis 5, **dadurch gekennzeichnet,** daß während der Initialisierungszeit alle steuerbaren Halbleitermittel (6, 7) von der Verarbeitungseinheit leitend geschaltet werden, daß die Verarbeitungseinheit feststellt, welches Spulenpaar (L2a, L2b bzw. L1a, L1b) zur Energieübertragung verwendet wird, und
daß die Verarbeitungseinheit dasjenige steuerbare Halbleiterelement (6 bzw. 7) nicht leitend schaltet, welches mit einem der Ausgänge des Gleichrichtermittels (3 bzw. 2) verbunden ist, das nicht zur Energieübertragung dient.

## Claims

1. Device for contactless data and energy transmission, consisting of a stationary part (ST) having means (1) for sending and receiving data which are transmitted to a moving part (BT) with the aid of in each case one first coil pair (L1a, L2a or L1b, L2b respectively) and having means (1) for generating energy which is transmitted to the moving part via a second coil pair (L1b, L2b or L1a, L2a respectively), it being possible to assign the coils of the stationary part (ST) to the coils of the moving part (BT) as desired, and the data transmission from the moving part (BT) to the stationary part (ST) being carried out by altering the loading on that coil of the moving part which is not used for energy transmission, rectifier means (2, 3) being in each case connected downstream of the coils (L2a, L2b) of the moving part (BT), a modulator (4, 5) being in each case connected downstream of the rectifier means (2, 3) and a processing unit being connected downstream of the modulators (4, 5), characterized in that one output (10, 12; 9, 11) of a rectifier means (2, 3) is in each case connected, via the load path of in each case one semiconductor element (6, 7) which can be controlled by the processing unit, to a charging capacitor (8) on which the unregulated operating voltage can be picked up, the controllable semiconductor elements (6, 7) being selected by the processing unit in such a way that, during an initialization period, both semiconductor elements (6, 7) are switched on and, after the initialization period, only that semiconductor element (6 or 7 respectively) which is connected to one of the outputs of the rectifier means (2 or 3 respectively) via which energy is transmitted is switched on.

2. Device for contactless data and energy transmission according to Claim 1, characterized by a modulator (4, 5) having:
- a first transistor (22), via the load path of which the two outputs (9, 10; 11, 12) of the rectifier means are connected to one another,
- a series circuit comprising a resistor (23) and the load path of a second transistor (24) which is connected between the operating-voltage terminals (9, 18; 11, 18) and whose node point is connected to the control terminal of the first transistor (22),
- an operational amplifier (25) whose output is connected to the control input of the second transistor (24) and whose negative input is supplied with a reference voltage and whose positive input is connected to the first input (9; 11), on the one hand via a terminal of a load path of a third transistor (28, 30) and, on the other hand, via a series circuit comprising the load path of a fourth transistor and of a second resistor,
- having a series circuit comprising a third and a fourth resistor (29, 31) which are connected between the two inputs (9, 10; 11, 12) and whose node point is connected to the positive input of the operational amplifier,
- a first control input (13, 15) which is connected to the control terminal of the fourth transistor (30) and which is supplied with the data signal,
- a second control input (14; 16) to which the signal for disconnecting the modulator and rectifier from the charging capacitor (8) is supplied and which is connected to the control input of the third transistor (28).

3. Device for contactless data and energy transmission according to Claim 2, characterized in that a capacitor (21) is connected between the two outputs (9, 10; 11, 12) of the rectifier means.

4. Device for contactless data and energy transmission according to Claim 2, characterized in that
- a controllable current source (35) is connected between the operating-voltage terminals (9, 18; 11, 18),
- a current mirror (33, 34) is provided, the input side of which is in series with the controllable current source (35) and the output side of which is connected between the control input of the first transistor (22) and the second input (10; 12) of the modulator (4; 5).

5. Device for contactless data and energy transmission according to one of the preceding claims, characterized in that the moving part (BT) is designed in the form of a cheque card or of a chip key.

6. Method for operating a device for contactless data and energy transmission according to one of Claims 1 to 5, characterized in that, during the initialization period, all controllable semiconductor means (6, 7) are switched on by the processing unit, in that the processing unit determines which coil pair (L2a, L2b or L1a, L1b respectively) is used for energy transmission, and in that the processing unit switches off that controllable semiconductor element (6 or 7 respectively) which is connected to one of the outputs of that rectifier means (3 or 2 respectively) which is not used for energy transmission.

## Revendications

1. Dispositif de transmission sans contact de données et d'énergie, constitué d'une partie fixe (ST) comportant des moyens (1) pour émettre et recevoir des données, qui sont transmises à l'aide respectivement d'un premier couple de bobines (L1a, L2a ou L1b, L2b) à une partie mobile (BT), et des moyens (1) servant à produire de l'énergie, qui est transmise par l'intermédiaire d'un second couple de bobines (L1b, L2b ou L1a, L2a) à la partie mobile, les bobines de la partie fixe (ST) devant être associées d'une manière quelconque aux bobines de la partie mobile (BT), et la transmission de données s'effectuant de la partie mobile (BT) à la partie fixe (ST) par modification de la charge appliquée à celle des bobines de la partie mobile, qui n'est pas utilisée pour la transmission de l'énergie, des moyens redresseurs (2,3), en aval desquels sont branchés des modulateurs respectifs (4,5) étant branchés respectivement en aval des bobines (L2a, L2b) de la partie mobile (BT), tandis qu'une unité de traitement est branchée en aval des modulateurs (4,5), caractérisé par le fait que des sorties (10,12; 9,11) de moyens redresseurs (2,3) sont reliées (8) respectivement par l'intermédiaire de la section de charge d'un élément à semiconducteurs (6,7), commandable par l'unité de traitement, à un condensateur (8) de charge, sur lequel peut être prélevée la tension de service non régulée, les éléments semiconducteurs commandables (6,7) étant commandés par l'unité de traitement de telle sorte que, pendant une durée d'initialisation, les deux éléments à semiconducteurs (6,7) sont placés à l'état conducteur et qu'après la durée d'initialisation, seul est placé à l'état conducteur l'élément à semiconducteurs (6 ou 7), qui est relié à l'une des sorties du moyen redresseur (2,3), par lequel de l'énergie est transmise.

2. Dispositif pour la transmission sans contact de données et d'énergie suivant la revendication 1, caractérisé par un modulateur (4,5) comprenant :
- un premier transistor (22), dont la section de charge relie les deux sorties (9,10; 11,12) des moyens redresseurs entre elles,
- un circuit série, qui est constitué d'une résistance (23) et de la section de charge d'un second transistor (24), qui est branché entre les bornes de la tension de service (9,18; 11,18) et dont le point nodal est relié à la borne de commande du premier transistor (22),
- un amplificateur opérationnel (25), dont la sortie est reliée à l'entrée de commande du second transistor (24), à l'entrée négative duquel est envoyée une tension de référence et dont l'entrée positive est reliée, d'une part par l'intermédiaire d'une borne d'une section de charge d'un troisième transistor (28,30) et d'autre part par l'intermédiaire d'un circuit série formé de la section de charge d'un quatrième transistor et d'une seconde résistance, à la première entrée (9;11),
- un circuit série formé de troisième et quatrième résistances (29,31), qui sont branchées entre les deux entrées (9,10;11,12) et dont le point nodal est raccordé à l'entrée positive de l'amplificateur opérationnel,
- une première entrée de commande (13,15) qui est reliée à la borne de commande du quatrième transistor (30) et à laquelle est envoyé le signal de données,
- une seconde entrée de commande (14;16), à laquelle le signal servant à découpler du condensateur de charge (8) le modulateur et le redresseur est envoyé et qui est relié à l'entrée de commande du troisième transistor (28).

3. Dispositif pour la transmission sans contact de données et d'énergie suivant la revendication 2, caractérisé par le fait qu'une capacité (21) est branchée entre les deux sorties (9,10; 11,12) des moyens redresseurs.

4. Dispositif pour la transmission sans contact de données et d'énergie suivant la revendication 2, caractérisé par le fait que
- une source de courant commandable (35) est branchée entre les bornes (9,18; 11,18) de tension de service,
- il est prévu un miroir de courant (33,34), qui est raccordé, côté entrée, en série avec la source de courant commandable (35) et est branché, côté sortie, entre l'entrée de commande du premier transistor (22) et la seconde entrée (10;12) du modulateur (4;5).

5. Dispositif pour la transmission sans contact de données et d'énergie suivant l'une des revendications précédentes, caractérisé par le fait que la partie mobile (BT) est réalisée sous la forme d'une carte de crédit ou d'une clé à puce.

6. Procédé pour faire fonctionner un dispositif pour la transmission sans contact de données et d'énergie suivant l'une des revendications 1 à 5, caractérisé par le fait que pendant la durée d'initialisation, tous les moyens à semiconducteurs commandables (6,7) sont placés à l'état conducteur par l'unité de traitement,
que l'unité de traitement détermine quel couple de bobines (L2a, L2b ou L1a, L1b) est utilisé pour la transmission de l'énergie, et
que l'unité de traitement place à l'état non conducteur l'élément à semiconducteurs commandable (6 ou 7), qui est relié à l'une des sorties du moyen redresseur (3 ou 2), qui n'est pas utilisé pour la transmission d'énergie.
